**Europäisches Patentamt**

**European Patent Office**

**Office européen des brevets**

(19)

(11) Veröffentlichungsnummer : **0 037 846**
**B1**

(12) **EUROPÄISCHE PATENTSCHRIFT**

(45) Veröffentlichungstag der Patentschrift :
29.02.84

(21) Anmeldenummer : 80102592.5

(22) Anmeldetag : 09.05.80

(51) Int. Cl.³ : **G 12 B  5/00**, B 41 J  5/10,
**G 06 F  3/02**

(54) Vorrichtung zur Einstellung der Neigung einer Tastatur.

(30) Priorität : 15.04.80 DE 3014423

(43) Veröffentlichungstag der Anmeldung :
21.10.81 Patentblatt 81/42

(45) Bekanntmachung des Hinweises auf die Patenterteilung : 29.02.84 Patentblatt 84/09

(84) Benannte Vertragsstaaten :
BE CH FR GB IT LI NL SE

(56) Entgegenhaltungen :
DE-A- 2 539 061
DE-B- 1 261 068
FR-A-   736 177
US-A- 1 385 256
US-A- 3 830 352
US-A- 3 902 034

(73) Patentinhaber : SIEMENS AKTIENGESELLSCHAFT
Berlin und München Wittelsbacherplatz 2
D-8000 München 2 (DE)

(72) Erfinder : Stahl, Horst
Waldstrasse 2b
D-8190 Weidach (DE)
Erfinder : Wachs, Walter
Dahlienstrasse 3
D-8033 Krailling (DE)

Vorrichtung zur Einstellung der Neigung einer Tastatur

Die Erfindung betrifft eine Vorrichtung gemäß dem Oberbegriff des Anspruchs 1.

In zunehmenden Maße spielen für den Einsatz von Tastaturen ergonomische Forderungen eine Rolle. Ein wesentlicher Gesichtspunkt ist dabei die Höhe der Tastatur. In der letzten Zeit hat sich allgemein für eine Tastaturhöhe von 30 mm (mittlere Tastenreihe) ein Neigungswinkel von 6° als günstig erwiesen. Tastaturen, die unter einem solchen Neigungswinkel gegen eine Standfläche geneigt sind, entsprechen die Anforderungen eines mehr oder weniger genormten Arbeitsplatzes und gehen von einer Durchschnittsgröße einer Bedienungsperson aus. Eine spätere Änderung der Neigung der Tastatur ist nicht mehr möglich, da diese bei der Montage fest eingestellt wird. Eine spätere Anpassung an sich ändernde Arbeitsbedingungen ist nicht oder nur sehr aufwendig möglich.

Aus der US-A-38 30 352 ist eine in der Neigung verstellbare Tastatur bekannt, die mechanisch mit einem Schreibwerk verbunden ist. Diese Anordnung hat den Nachteil, daß die Tastatur gegenüber dem Schreibwerk nicht frei aufstellbar ist.

Aus der US-A-39 02 034 ist eine Tastatur mit verstellbarer Neigung bekannt. Die Neigung ist hier stufenweise durch einen rastbaren Schieber verstellbar.

Der Erfindung liegt die Aufgabe zugrunde, eine Möglichkeit zur Einstellung des Neigungswinkels einer Tastatur zu schaffen. Dabei soll einerseits die Einstellung leicht und an Arbeitsplatz jederzeit durchführbar sein, andererseits soll der dazu erforderliche konstruktive Aufwand gering sein.

Diese Aufgabe wird erfindungsgemäß durch die im Kennzeichen des Anspruches 1 angegebenen Merkmale gelöst.

Mit der Erfindung wird der Vorteil erreicht, daß der Neigungswinkel einer Tastatur jederzeit kontinuierlich zwischen einem minimalen und einem maximalen Neigungswinkel einstellbar ist. Gemäß der Erfindung erfolgt die Einstellung des Neigungswinkels durch Verdrehung von Kurvenscheiben über eine Verstellachse, was sich in einem geringen Aufwand und in einer einfachen konstruktiven Gestaltung äußert, und einen nahezu störungs- und wartungsfreien Betrieb gewährleistet.

In weiterer Ausgestaltung der Erfindung sind zur Aufnahme der Achse, auf der die Kurvenscheiben angeordnet sind, und zur Halterung der Verstellachse Schnappverschlüsse am Tastaturgehäuse vorgesehen, die nicht nur eine sichere Halterung gewährleisten, sondern auch hinsichtlich der Fertigung und der Montage vorteilhaft sind.

Zur Erleichterung der manuellen Einstellung kann auf der Verstellachse ein Rändelrad angeordnet sein, mit dem die Verstellung der Neigung der Tastatur ohne Aufwand durch die Bedienungsperson von außen einstellbar ist.

Weitere Einzelheiten der Erfindung werden im folgenden unter Bezugnahme auf die Zeichnungen anhand eines Ausführungsbeispieles erläutert. Dabei zeigt

Figur 1 ein Ausführungsbeispiel für eine Tastatur in Seitenansicht,

Figur 2 eine Schnittdarstellung der Anordnung nach Fig. 1,

Figur 3 ein Ausführungsbeispiel nach Fig. 1 und 2 mit einem größeren Neigungswinkel.

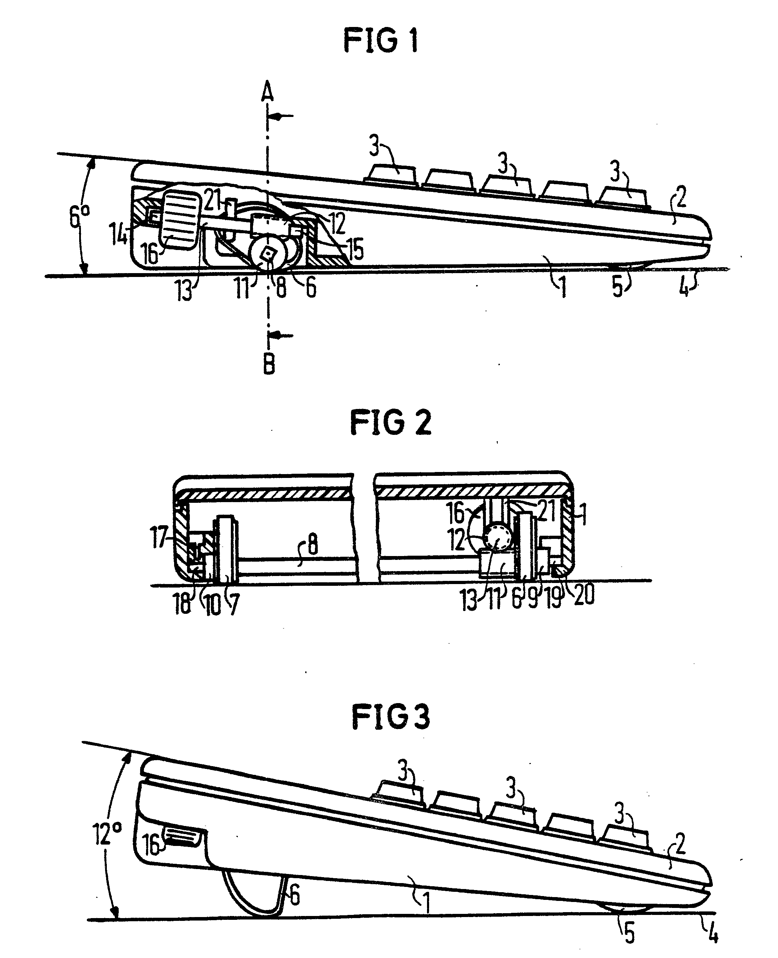

Das Ausführungsbeispiel nach Fig. 1 zeigt in Seitenansicht eine Tastatur, die aus einem Gehäuseteil 1, einem Gehäuseoberteil 2 und dem eigentlichen Tastenfeld 3 besteht und die unter einem Winkel von 6° gegen eine Standfläche 4 geneigt ist. Am vorderen Ende der Tastatur sind Auflageelemente vorgesehen, von denen hier nur das Auflageelement 5 dargestellt ist. Die am anderen Ende der Tastatur angeordneten Auflageelemente sind Bestandteil des Verstellmechanismus, auf dem im folgenden unter gleichzeitiger Bezugnahme auf Fig. 2 näher eingegangen wird. Der Verstellmechanismus enthält zwei Auflageelemente, die in Form von Kurvenscheiben 6 und 7 ausgebildet sind, und die auf einer Achse 8, beispielsweise aufsteckbar, angeordnet sind. Die Achse 8 kann als Profilstange z. B. als Vierkant- oder Sechskantstange ausgebildet sein. Die Kurvenscheiben 6 und 7 besitzen Zentrieransätze 9 und 10, mit denen sie sich in entsprechend geformte Ausnehmungen des Gehäuseunterteiles 1 abstützen. An mindestens einer der Kurvenscheiben, im Beispiel an der Kurvenscheibe 6, ist eine Verzahnung 11 vorgesehen, über die sie mit einer weiteren Verzahnung 12 einer Verstellachse 13 in Eingriff steht. Die Verzahnungen 11 und 12 sind zweckmäßigerweise angeformt. Die Verstellachse 13 stützt sich ebenfalls mit ihren Lagerzapfen 14 und 15 in entsprechend geformte Ausnehmungen im Unterteil 1 des Tastaturgehäuses ab. Zur Erleichterung der manuellen Verstellung des Neigungswinkels ist an der Verstellachse 13 ein Rändelrad 16 vorgesehen.

Die Wirkungsweise der Verstellvorrichtung ist dabei folgende. Durch Drehen an dem Rändelrad 16 wird über die Verstellachse 13 und die beiden Verzahnungen 12 und 11 die Kurvenscheibe 6 und über die Achse 8 die damit drehsicher verbundene Kurvenscheibe 7 verdreht. Auf Grund der exzentrischen Form der Kurvenscheiben 6 und 7 wird damit die Tastatur einseitig engehoben und der Neigungswinkel vergrößert. Die Einstellung des Neigungswinkels kann kontinuierlich zwischen einem Minimal- und einem Maximalwert, beispielsweise zwischen 6° und 12° erfolgen, da die Verzahnungen 11 und 12 als Schraubenverzahnungen ausgebildet sind und infolge ihrer Selbsthemmung ein selbsttätiges Zurückdrehen verhindern. Die Begrenzung auf einen Minimal- und einen Maximalwert für den Neigungswinkel wird durch Anschlagkanten im Unterteil 1 des Tastaturgehäuses begrenzt.

Ein Beispiel, bei dem die Tastatur unter einem Neigungswinkel von 12° gegen die Standfläche 4 geneigt ist, zeigt Fig. 3.

Zur Befestigung der Verstellvorrichtung im Tastaturgehäuse sind am Unterteil des Gehäuseteiles 1 federnde Ansätze angeformt, in die Haltezapfen der Kurvenscheiben eindrückbar sind, und die somit einen Schnappverschluß für die Kurvenscheiben bilden. Im Ausführungsbeispiel ist ein solcher aus dem federnden Ansatz 17 und dem Haltezapfen 18 bestehender Schnappverschluß nur an der linken Seite dargestellt. An der rechten Seite erfolgt die Befestigung der die Kurvenscheiben tragenden Achse 8 dadurch, daß der Haltezapfen 19 hinter die Kante 20 des unteren Gehäuseteiles 1 greift und dadurch gehalten wird. In ähnlicher Weise ist auch die Befestigung der Verstellachse 13 gesichert. Dazu ist ein weiterer federnder Ansatz 21 vorgesehen, in den die Verstellachse 13 eingedrückt und nach Art eines Schnappverschlusses gehalten wird.

Zum Aufbau der erfindungsgemäßen Verstellvorrichtung werden billige und robuste Einzelteile verwendet, deren Montage aufwandsarm und in sehr einfacher Weise erfolgt. Dabei wird die Verstellachse 13 in die beim Erstellen des Gehäuseunterteiles 1 (vorzugsweise in Spritzgußtechnik) bereits berücksichtigten Ausnehmungen eingelegt und über den Schnappverschluß 21 gehalten. Dann werden die Kurvenscheiben 6 und 7 auf die Achse 8 aufgesteckt, was besonders einfach ist, wenn als Achse 8 eine Vierkantstange oder Vierkantachse verwendet wird. Anschließend wird der Haltezapfen 19 mit der Gehäusekante 20 in Eingriff gebracht und der Haltezapfen 18 in den federnden Ansatz 17 eingeschnappt.

Zur Erhöhung der Standfestigkeit kann auf den Kurvenscheiben ein Werkstoff, z. B. ein Gummiring, aufgebracht sein, der die Reibung zwischen den Auflageelementen und der Standfläche 4 erhöht.

Eine Anpassung der Verstelleinrichtung an verschiedenen Tastaturbreiten kann in einfacher Weise durch Auswechseln der Achse 8, auf der die Kurvenscheiben angebracht sind, erfolgen.

## Ansprüche

1. Vorrichtung zum Einstellen der Neigung einer Tastatur, dadurch gekennzeichnet, daß an der Tastatur (1, 2, 3) ein Verstellmechanismus vorgesehen ist, mit dem die Neigung der Tastatur (1, 2, 3) zwischen zwei Endwerten beliebig einstellbar ist, daß der Verstellmechanismus mindestens zwei auf einer im Gehäuse (1, 2, 3) der Tastatur beidseitig gelagerten Achse (8) angeordneten Kurvenscheiben (6, 7) aufweist, daß die Kurvenscheiben (6, 7) eine Auflage für die Tastatur bilden und über eine Verstelleinrichtung (11, 12, 13) verdrehbar sind.

2. Vorrichtung nach Anspruch 1, dadurch gekennzeichnet, daß die Verstelleinrichtung eine im Tastaturgehäuse (1) gelagerte Verstellachse (13) umfaßt, die an einem Ende eine Verzahnung 12) aufweist, über die sie mit einer an mindestens einer Kurvenscheibe (6) angeordneten Verzahnung (11) in Eingriff steht.

3. Vorrichtung nach Anspruch 1 et 2, dadurch gekennzeichnet, daß die Achse (8) zur Aufnahme der Kurvenscheiben (6, 7) beidseitige Zentrieransätze (9, 10) und Haltezapfen (18, 19) und das Tastaturgehäuse (1) zur Aufnahme mindestens eines Haltezapfens (18) Federansätze (17) aufweist, die für den Haltezapfen (18) einen Schnappverschluß bilden.

4. Vorrichtung nach Anspruch 3, dadurch gekennzeichnet, daß der Schnappverschluß für den Haltezapfen (18) nur an einer Seite des Tastaturgehäuses (1) vorgesehen ist.

5. Vorrichtung nach einem der Ansprüche 1 bis 4, dadurch gekennzeichnet, daß die Verstellachse (13) mittels eines am Tastaturgehäuse (1) angeordneten federnden Ansatzes (21) schnappbar befestigt ist.

6. Vorrichtung nach Anspruch 1, dadurch gekennzeichnet, daß die Achse (8) zur Aufnahme der Kurvenscheiben als profilierte Stange ausgebildet ist.

7. Vorrichtung nach einem der Ansprüche 1 bis 6, dadurch gekennzeichnet, daß zur manuellen Verstellung auf der Verstellachse (13) ein Rändelrad (16) vorgesehen ist.

8. Vorrichtung nach einem der Ansprüche 1 bis 7, dadurch gekennzeichnet, daß die Kurvenscheiben (6, 7) mit einem die Reibung zwischen diesen und der Standfläche (4) erhöhenden Werkstoff überzogen sind.

## Claims

1. Apparatus for adjusting the inclination of a keyboard, characterised in that by the keyboard (1, 2, 3) an adjusting mechanism is arranged, by means of which the inclination of the keyboard (1, 2, 3) can be adjusted as desired between two end values ; that the adjusting mechanism has at least two cam plates (6, 7) arranged on an axle (8), which cam plates are positioned on both sides in the housing (1, 2, 3) of the keyboard ; an that the cam plates (6, 7) form a support for the keyboard and are rotatable by means of an adjusting device (11, 12, 13).

2. Apparatus according to Claim 1, characterised in that the adjusting device comprises an adjusting shaft (13) which at the one end has a gearing (12), by means of which it engages with a gearing (11) arranged on at least one cam plate (6).

3. Apparatus according to Claim 1 and 2, characterised in that, in order to accommodate the cam plates (6, 7), the axle (8) is provided with centering attachments (9, 10) and holding pins (18, 19) on both sides, and in order to accommodate at least one holding pin (18), the keyboard housing (1) has spring attachments (17) which form a snap lock for the holding pin (18).

4. Apparatus according to Claim 3, characterised in that the snap lock for the holding pin (18) is provided on one side only of the keyboard housing (1).

5. Apparatus according to one of Claims 1 to 4, characterised in that the adjusting shaft (13) is snapably secured by means of a spring attachment (21) arranged at the keyboard housing (1).

6. Apparatus according to Claim 1, characterised in that, in order to accommodate the cam plates, the axle (8) is formed as a profiled rod.

7. Apparatus according to one of Claims 1 to 6, characterised in that, for manual adjustment, a knurled wheel (16) is provided on the adjusting shaft (13).

8. Apparatus according to one of Claims 1 to 7, characterised in that the cam plates (6, 7) are coated with a material which increases th friction between said cam plates and the base (4).

**Revendications**

1. Dispositif pour ajuster l'inclinaison d'un clavier, caractérisé par le fait qu'au clavier (1, 2, 3) est associé un mécanisme de réglage à l'aide duquel l'inclinaison du clavier (1, 2, 3) est réglable à volonté entre deux valeurs finales, que le mécanisme de réglage comporte au moins deux cames (6, 7) disposées sur un arbre (8) monté par ses deux côtés dans le carter (1, 2, 3) du clavier, que les cames (6, 7) constituent un appui pour le clavier et sont susceptibles d'être tournées par l'intermédiaire d'un dispositif de réglage (11, 12, 13).

2. Dispositif selon la revendication 1, caractérisé par le fait que le dispositif de réglage comporte un axe de réglage (13) monté dans le carter (1) du clavier, ledit axe de réglage comportant à une extrémité une denture (12) par l'intermédiaire de laquelle elle est en prise avec une denture (11) prévue sur au moins une came (6).

3. Dispositif selon la revendication 1 et 2, caractérisé par le fait que l'axe (8) comporte, pour recevoir les cames (6, 7) de part et d'autre des appendices de centrage (9, 10) et des tourillons de support (18, 19) et le carter du clavier (1), des appendices élastiques (17) pour recevoir au moins un appendice de support (18), lesdits appendices élastiques constituant pour le tourillon de support (18), une fermeture à encliquetage.

4. Dispositif selon la revendication 3, caractérisé par le fait que le dispositif à encliquetage pour le tourillon de support (18) n'est prévu que sur un côté du carter du clavier (1).

5. Dispositif selon l'une des revendications 1 à 4, caractérisé par le fait que l'axe de réglage (13) est fixé à enclenchement au moyen d'un appendice élastique (21) prévu sur le carter du clavier (1).

6. Dispositif selon la revendication 1, caractérisé par le fait que l'axe (8) servant à recevoir les cames est réalisé sous la forme d'une tige profilée.

7. Dispositif selon l'une des revendications 1 à 6, caractérisé par le fait que pour le réglage manuel il est prévu un bouton cranté (16) sur l'axe de réglage (13).

8. Dispositif selon l'une des revendications 1 à 7, caractérisé par le fait que les cames (6, 7) sont revêtues d'un matériau qui augmente la friction entre lesdites cames et la surface d'appui (4).

# FIG 1

# FIG 2

# FIG 3